# EUROPEAN PATENT SPECIFICATION

(11) **EP 1 766 500 B1**
(45) Date of publication and mention of the grant of the patent: **23.04.2008**
(21) Application number: 05750327.8
(22) Date of filing: 10.06.2005
(51) Int. Cl.: G06F 3/02, B41J 5/00, F16K 7/04

(54) **ACTUATION APPARATUS**
BETÄTIGUNGSVORRICHTUNG
APPAREIL D'ACTIVATION

(30) Priority: 28.06.2004 GB 0414437; 02.03.2005 GB 0504329
(43) Date of publication of application: 28.03.2007
(73) Proprietor: Holland, John Peter, London SW6 4BA (GB)
(72) Inventor: Holland, John Peter, London SW6 4BA (GB)
(74) Representative: Suèr, Steven Johannes
(86) International application number: PCT/GB2005/002311
(87) International publication number: WO 2006/000749

(56) References cited:
- WO-A-20/04008095
- GB-A- 2 022 866
- US-A- 3 034 628
- US-A- 3 603 983
- PATENT ABSTRACTS OF JAPAN vol. 016, no. 495 (P-1436), 14 October 1992 (1992-10-14) & JP 04 178811 A (TOSHIBA CORP), 25 June 1992 (1992-06-25)

## Description

The present invention relates to apparatus for actuating one or more functions on an electronic device.

In this regard, electrical devices such as computers are becoming increasingly part of our everyday function. More and more we are using computers both at work and home. Virtually wherever we are, we are in close proximity to a computer. This increased exposure to electronic devices, whilst of course adding enormous benefits to our overall lifestyle, also poses new risks and hazards.

In this regard, there are environments where such radiation is undesirable and to be avoided. For example, certain electronic devices will not themselves function correctly if subjected to unwanted radiation. Moreover, in wet or moist environments, any form of unprotected electronic circuitry has the potential of failing and/or causing electric shock.

Moreover, the levels of radiation emitted from even standard electronic equipment can significantly affect the well being of susceptible individuals.

The present invention seeks to provide in one aspect an arrangement which can help to alleviate such problems.

According to a first aspect of the present invention there is provided apparatus for actuating one or more functions on a remote electronic device; the apparatus comprising : - one or more button members provided within a housing having no electronic components, each button member being associated with at least one fluid channel; a remote conversion means associated with the or each fluid channel; wherein the or each button member is movable with respect to its at least one said fluid channel to cause an internal pressure change in said at least one fluid channel, said remote conversion means detecting the pressure change to thereby produce an electrical signal for actuating an appropriate function on said remote electronic device.

In this way, an apparatus is provided which locally is free from any form of electri-c/electronic circuitry and can remotely operate an electronic device, such as a computer. In this way the apparatus assists to alleviate the health problems associated with coming into close contact with radiation from electrical circuitry in apparatus such as computer keyboards, mice and pointing devices.

Preferably, movement of the or each button member .causes compression of the at least one fluid channel to thereby increase the internal pressure therein. In such an embodiment, it is not necessary that a pump is provided to sustain a positive or negative pressure within the fluid channels. Therefore, the manufacturing and running costs of the apparatus can be reduced.

Preferably, the at least one fluid channel is provided with one or more bulbous sections associated with each button member, wherein movement of said button member causes compression of the associated bulbous section.

Preferably, each bulbous section is in the form of a bellow.

In alternative embodiments, movement of the or each button member can cause one or more apertures in the fluid channel associated with said button member to open for allowing the fluid channel to be connected to an ambient pressure, resulting in a pressure change in the fluid channel; and wherein said button member is ordinarily biassed to close said aperture. In this way, the present invention advantageously uses the natural atmospheric pressure to actuate a function on the remote device.

Preferably, the apparatus further comprises means for creating a pressure gradient between said fluid in said fluid channel and ambient pressure.

Preferably, the or each button has associated therewith a shutter element for operably opening and closing said aperture, wherein upon actuation of said button member, said shutter element opens said fluid channel to ambient pressure.

Preferably, said remote conversion means comprises sensor means for detecting a pressure change.

Preferably, the conversion means further comprises sensor adjustment means for adjusting the sensitivity of the sensor. Therefore, advantageously, the sensitivity of the sensor can be adjusted according to the ambient atmospheric pressure and the pressure drop required within the fluid channels to optimise the detection of a change in pressure.

Preferably, the greater the internal pressure change in said at least one fluid channel, the greater the electrical signal produced by the conversion means. This allows the signals produced by the conversion means to have variable intensities which can then impart variable effects upon the function that the electrical signal will produce. For example, if the electrical signal is to impart movement of a cursor across a computer screen, the greater the electrical signal produced, the faster or further the cursor may move.

Preferably, said one or more button members are interconnected within a matrix of fluid paths; a plurality of fluid channels are provided for conveying fluid media between said matrix and said remote conversion means; the or each button member having a unique address within the matrix such that when operable by a user, a unique signature for that button member is detectable from said plurality of fluid channels; whereby said conversion means can detect said or each unique signature on operation of said or each button member and produce an electrical signal for actuating an appropriate function on a remote electronic device. In this way, a pressure increase in a combination of fluid channels can be used to determine which of the button members is pressed.

According to a second aspect of the present invention, there is provided apparatus for actuating one or more functions on a remote electronic device; the apparatus comprising:- one or more button members interconnected within a matrix of fluid paths; a plurality of fluid channels for conveying fluid media between said matrix and a remote conversion means; the or each button member having a unique address within the matrix such that when operable by a user, a unique signature for that button member is detectable from said plurality of fluid channels; whereby said conversion means can detect said or each unique signature on operation of said or each button member and produce an electrical signal for actuating an appropriate function on a remote electronic device.

Therefore, the present invention allows the button members to effectively share pneumatic paths. Accordingly, the size of the cabling, piping or tubing required can be minimised, resulting in reduced costs, size and weight.

Preferably, the fluid channels are pneumatic channels.

Preferably, the fluid channels are hydraulic channels.

Preferably, the button member comprises one or more actuating members for acting on the at least one fluid channel to cause an internal pressure change therein.

According to a third aspect of the present invention, there is provided apparatus for actuating at least one function on a remote electronic device, the apparatus comprising:- one or more button members provided within a housing having no electronic components, each button member being associated with at least one fluid channel; a remote conversion means associated with the or each said fluid channel; wherein the or each said button member is movable with respect to its at least one said fluid channel to cause compression of the same, whereby operation of said button member causes an internal pressure change in said at least one fluid channel, said conversion means detecting the pressure change to thereby produce an electrical signal for actuating an appropriate function on said remote electronic device.

Preferably, the resting internal pressure of said at least one fluid channel is provided at atmospheric pressure or at greater than atmospheric pressure.

Preferably, said at least one fluid channel is resiliently deformable. In this way, the elasticity of the fluid channel itself can be used to re-inflate the channel after compression.

Preferably, the at least one fluid channel is formed of rubber or plastic.

Preferably, said at least one fluid channel are formed by coupling a flexible layer, having a pattern for said least one fluid channel formed therein, to a rigid substrate.

According to a fourth aspect of the present invention, there is provided apparatus for actuating one or more functions on a remote electronic device; the apparatus comprising:- one or more button members provided within a housing having no electronic components, each button member being associated with at least one aperture of a pneumatic channel; a remote conversion means associated with said pneumatic channel; and means for creating a reduced pressure within said pneumatic channel; wherein said button member is ordinarily biassed to close said aperture, whereby actuation of said button member opens said aperture for allowing said channel to be connected to ambient pressure, said conversion means detecting a resulting pressure change to thereby produce an electrical signal for actuating an appropriate function on said remote electronic device.

Preferably, said one or more each button members are connectable to a plurality of pneumatic channels through one or more apertures; whereby actuation of a said button member opens said one or more apertures for allowing said plurality of pneumatic channels to be connected to ambient pressure, said conversion means detecting a resulting pressure change in said plurality of pneumatic channels, thereby producing an electrical signal for actuating an appropriate function on said remote electronic device.

According to a fifth aspect of the present invention, there is provided a computer mouse comprising any apparatus described above.

According to a sixth aspect of the present invention, there is provided a keyboard or keypad comprising apparatus according to any apparatus described above.

According to a seventh aspect of the present invention, there is provided a method of manufacturing apparatus for actuating one or more functions on a remote electronic device; the method comprising the steps of:- providing a plurality of lamina-like layers, each layer having one or more pneumatic paths or path sections disposed therein; combining the plurality of layers to form a manifold housing a three dimensional matrix of such pneumatic paths; associating one or more button members with said matrix, the or -each button member having a unique address within the matrix; and coupling a plurality of pneumatic channels for conveying pneumatic media between said matrix and a remote conversion means, said conversion means detecting a unique signature for each button member on operation thereof and producing an electrical signal for actuating an appropriate function on a remote electronic device.

Therefore, the present invention provides a method allowing simple manufacture of a three dimensional matrix of pneumatic paths which allows the buttons to effectively share pneumatic paths achieving the associated advantages described above.

Document US 3 603 983 shows an arrangement in which the electrical switches 17 are provided in the housing and separate tubes are required for each fluid channel. Determination of which button is pressed is solely based on the configuration of a key plate 19. The sequential arrangement of the keys in US 3 603 983 is extremely disadvantageous as signals from the keys furthest from the switches take much longer to travel along the tubes, and no intervening keys may be pressed until detection is made. Furthermore, multiple keys cannot be pressed simultaneously. This means that such a keyboard would be impractical for normal typing.

JP 04 178 811 employs a cover provided over a base. In this example, the base has two simple grooves engraved in it, with the cover forming the keys above. When a key is depressed, a pressure wave (a sound wave) is created in the underlying groove, two detectors provided at either end of the grooves are then used to determine the difference in time of arrival of the pressure wave, which can then be used to determine which key has been depressed. The JP documents concerns with reducing the size and weight of a keyboard. The size and weight savings imply more processing power to determine which key has been depressed, and this construction is more likely to suffer from false positives when adjacent keys are operated. Furthermore, multiple keys cannot be pressed simultaneously. In contrast, the present invention offers an alternative to conventional devices without requiring significantly increased processing power and without compromising accuracy or functionality.

US 3 034 628 discloses a pneumatic keyboard where each key is individually connected to a fluid chamber and a fluid amplifier arrangement via a passageway or tube.

Examples of the present invention will now be described with reference to the accompanying drawings, in which:-
Figure 1 shows a cut away view of apparatus a first embodiment of the present invention'with a button member in an upper unpressed position;
Figure 2 shows a cut away view of apparatus of a first embodiment of the present invention with a button member in a lower pressed position;
Figure 3 shows a part cross-sectional view of apparatus of a first embodiment of the present invention; and
Figure 4 shows a cut away view of apparatus of a second embodiment of the present invention in a first un-operated position;
Figure 5 shows a cut away view of apparatus of a second embodiment of the present invention in an operated position;
Figure 6 shows a view of fluid channels and an actuator in the apparatus of a second embodiment of the present invention;
Figure 7 shows an expanded perspective view of apparatus of a third embodiment of the present invention;
Figure 8 shows an expanded perspective view of apparatus of a fourth embodiment of the present invention;
Figure 9 shows a cross-sectional view of the apparatus of the fourth embodiment of the present invention;
Figure 10 shows a top view of apparatus of a fifth embodiment of the present invention;
Figure 11 shows an exploded view of apparatus of a sixth embodiment of the present invention;
Figure 12 shows in detail a pneumatic layer from figure 11;
Figure 13 shows apparatus of a seventh embodiment of the present invention;
Figure 14 shows in cross section the keyboard arrangement shown in Figure 13 connecting to a remote sensing apparatus;
Figure 15 shows a part cross-sectional view of apparatus of an eighth embodiment of the present invention;
Figures 16a to 16c show apparatus of a ninth embodiment of the present invention, where figure 16a shows a plan view, figure 16b shows a perspective view, and figure 16c shows a cross-sectional plan view.

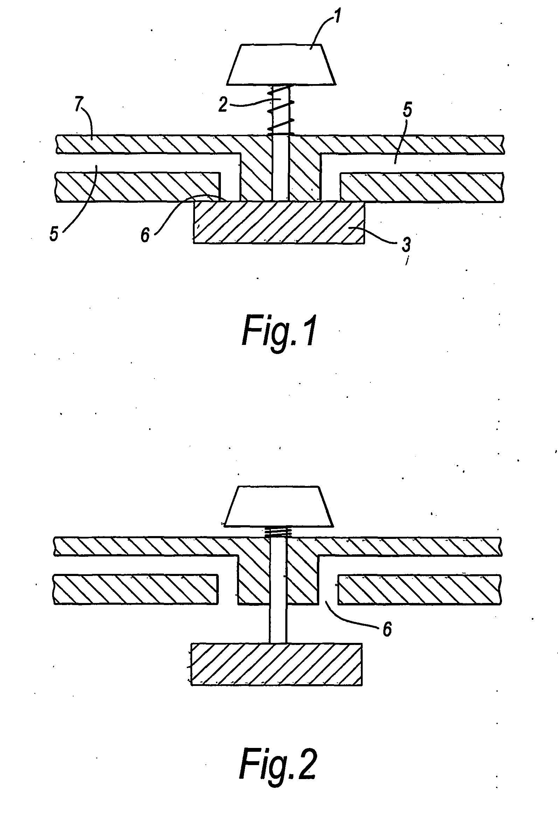

Figures 1 and 2 show, in simplified form, apparatus according to a first embodiment of the present invention, and more particularly an input button, free from any form of electric circuitry.

The button is part of a larger array of buttons, such as an array of keys on a keyboard. The button comprises a button member 1, and a shutter 3 connected to the button member 1.

The button member 1 and the shutter 3 are moveably secured by a housing 7, whereby a user, upon pushing the button member 1, will cause the button member 1 and the shutter 3 to move downward from a rest position to a lower position, as shown in Figure 2.

The input button includes a biassing element, such as a spring, surrounding the actuation member 2, to resiliently urge the button member 1 and the shutter 3 back to the upper rest position.

The button member 1 may, .alternatively, not be directly connected to the shutter 3, but rather the shutter 3 may form a separate component onto which the button member 1 abuts. For example, the shutter 3 may be formed on a rubber key mat positioned beneath the button member 1. In an unpressed state, the spring action of the rubber key mat urges the shutter 3, and hence the button member 1, into an upper rest position. When a user presses the button member 1, it acts as a plunger on the shutter 3 and forces it down into a lower position.

In the example shown in Figure 1, a plurality of such button members 1 are provided within an array, which is provided with one or more media paths, disposed above the shutter 3. In this example the media paths are pneumatic channels 5.

The proximate ends of the pneumatic channels 5 open at apertures 6 onto the underside of the housing 7. When the shutter 3 is in its upper position, it is seated against the underside of the housing 7 so as to act as a seal and blocks apertures 6.

Preferably, the shutter is formed of an elastic material such as foam rubber so as to form an effective seal and is biassed into the upper position by a spring surrounding the actuation member 2, or another resilient configuration such as a rubber key mat.

At a remote end of the pneumatic channels 5, a pump is provided which acts to reduce the air pressure within the channel, thereby generating a partial vacuum within the pneumatic channels. When the button is in a normal unpressed state, this partial vacuum is maintained by the pump and air is prevented from entering the pneumatic channels 5 by the shutter 3. Preferably, the pressure within the pneumatic channels in the unpressed state is approximately 5 PSI below atmospheric pressure. Additionally, the remote end of the each channel is also provided with a pressure sensor for detecting a change in pressure within the channel and responsively outputting an electrical signal.

Upon a user pressing a button, the shutter 3 is moved towards its lower position, thereby opening the apertures 6 and allowing air to flow through the pneumatic channels 5.

Subsequently, there is an increase of pressure within the pneumatic channels as the vacuum is breached. This increase in pressure is then detected by the pressure sensors connected to the remote ends of each channel, which in turn outputs an electrical signal.

In a preferred embodiment the pressure sensor has a sensor adjustment means which allows the sensitivity of the sensor to be adjusted. In this way, the sensitivity of the sensor can be adjusted according to the level of ambient atmospheric pressure and the required reduced pressure level within the pneumatic channels, to thereby optimise the detection of a change in pressure. For example, at altitude, where atmospheric pressure is lower, a user or an automated system may increase the sensitivity of the sensor to account for the reduced pressure gradient between atmosphere and the partial vacuum.

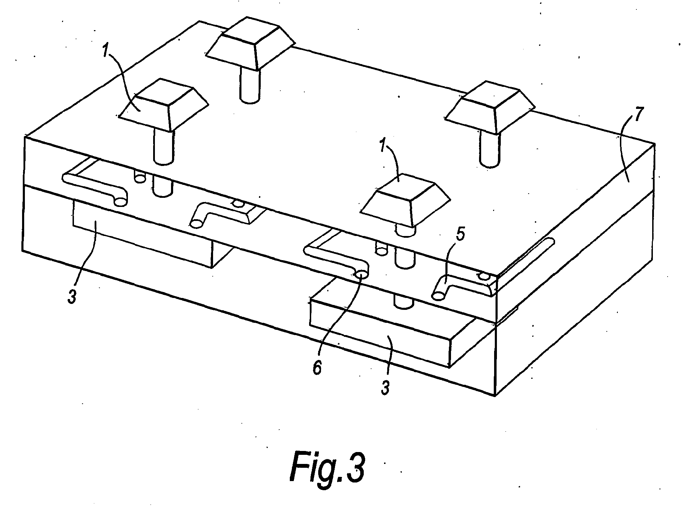

Figure 3 shows a four button section of an array of buttons similar to that described above with reference to Figures 1 and 2. Within the housing 7 there are a number of pneumatic channels 5 which open at apertures 6 onto the underside of the housing 7. Three of the button members are unpressed, whilst the button 1 at the bottom right side of the diagram is in its lower position as if its button member 1 has been pressed by a user . In this case therefore, the four apertures 6 associated with that depressed button are simultaneously opened as the shutter 3 moves downward. Accordingly, the vacuums within each of the associated four pneumatic channels 5 are breached and there is an influx of air from the atmosphere. The pressure sensors located at the remote ends of these pneumatic channels detect the increased pressure and output an electrical signal, which can then be processed by a micro controller to determine which of the buttons has been pressed.

Advantageously, with this embodiment, since the pneumatic channels are normally under a partial vacuum, any bending and compression of the channels, is less liable to result in false positive detection of a button member actuation, compared to pressurised systems.

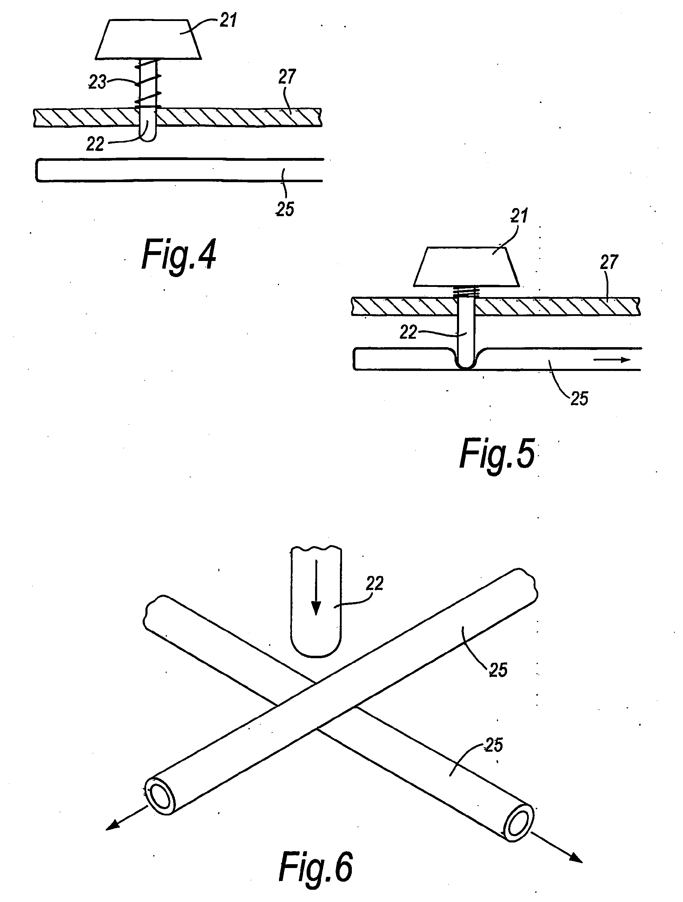

Figures 4 and 5 show, in simplified form, an input button according to a second embodiment of the present invention. As with the first embodiment, the button is in practice part of a larger array of buttons, such as an array of keys on a keyboard.

Similar to the first embodiment, a user pushing the button member 21 will cause the button member 21 and the actuating member 22 to move downward from a rest position, as shown in Figure 1, to a lower position, as shown in Figure 2. Again, a biassing element 23, such as a spring, is provided to resiliently urge the button member 21 and the actuating member 22 back to the upper rest position.

Beneath each button member 21, disposed below the actuating member 22, one or more media paths are provided. For simplicity only one media path is shown in Figures 4 and 5. In this example, the media paths are fluid (hydraulic or pneumatic) channels 25. The channels 25 may be formed of any suitable material, for example, rubber or plastic tubing, cabling or piping. This allows the channels 25 to be resiliently deformable for allowing multiple compressions thereof, and flexible for being positioned within articles of various sizes or shapes.

As shown, the actuating member 22 is configured to compress the channel 5 when the button member 21 is urged into a lower position. In their normal state, the channels 25 can either be maintained at a positive pressure, i.e. above atmospheric pressure, or allowed to remain at atmospheric pressure. If the channels 25 are to be maintained at a positive pressure, then a pump (not shown) is provided which acts to increase the pressure within the channel 25. If the channels are allowed to remain at atmospheric pressure, then a pump is not required.

When the button member 21 is in a normal unpressed state, the pressure in the channel 25 remains constant. The remote end of the each channel is provided with a pressure sensor for detecting a. change in pressure within the channel and responsively outputting an electrical signal.

Upon a user pressing a button member, the actuating member 22 is moved towards its lower position, thereby compressing the channel 25. Subsequently, there is an increase of pressure within the channel as the volume within the pneumatic channel is effectively reduced. This increase in pressure is then detected by the pressure sensors connected to the remote ends of each channel, which in turn outputs an electrical signal indicating that the pressure has increased.

The channels may be filled with any suitable fluid medium, for example, air or liquid.

The pressure sensor is able to detect the intensity of the compression imparted by the actuating member, i.e. the greater the force of compression, the greater the signal produced.

In order to ensure a change in pressure upon compression of the channel and to enable positive pressurisation of the channel prior to compression by an actuating member, the end of the channel which is not connected to a pressure sensor is preferably sealed. In this connection, as detailed below with reference to further embodiments of the present invention, one end of the channel may be formed into a sealed bulbous element for interaction with the actuating member 22.

Figure 6 shows perspective representation of two channels 25 disposed below the actuating member 22 according to the second embodiment discussed above with reference to Figures 4 and 5. As will be evident, movement of the actuating member 22 into its lower position will cause both of the two channels 25 to be compressed, resulting in an in an increase of pressure within both channels 25, which can then be detected at the remote ends of each channel. The arrangement of channels 25 shown in Figure 6 is particularly useful within the context of an array of buttons, such as an array of keys on a keyboard, since the plurality of buttons can be positioned along a grid-like matrix of channels, with each button associated with a unique combination of channels. Such an arrangement is discussed in more detail later..

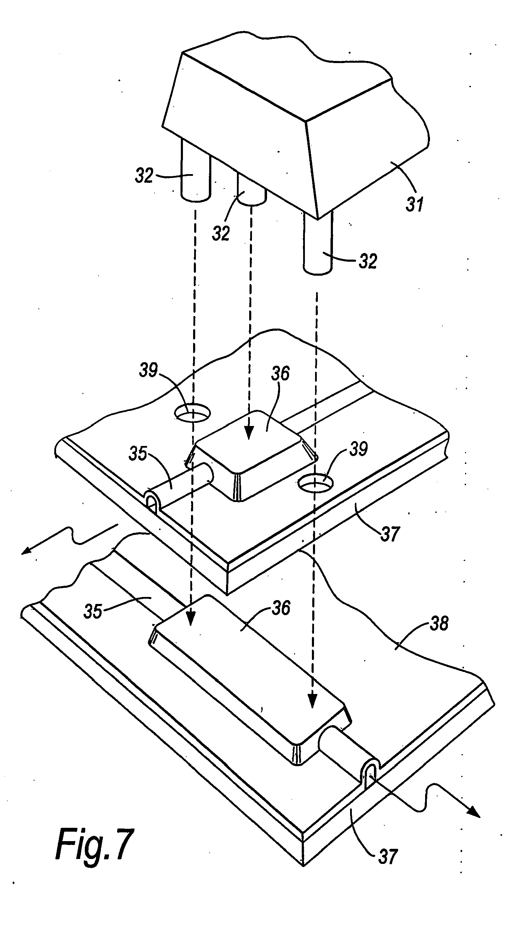

Figure 7 shows, in an expanded perspective view, an input button according to a third embodiment of the present invention, which can be used as part of a larger array of buttons. As with the second embodiment, a user pushing the button member 31 will cause the actuating member 32 to move downwardly to compress media pathways, in the form of channels 35, beneath. In this embodiment however, the channels 35 are provided with enlarged or bulbous bellow 5 sections 36. These bellow sections 36 are compressed by the actuation member 32 when it is moved into a lower position. Since the bellow sections 36 contain a large volume of fluid (e.g. air or a liquid) relative the narrower channel sections of the channel 35, their compression results in a large 0 increase in pressure which can more easily be detected by pressure sensors at the distal end of channels 35.

In the construction shown in Figure 7, the two associated channels 35 are formed on separate layers which can then be superimposed on top of one another. Each layer comprises a rigid substrate 37 and a flexible layer 3B, preferably formed of flexible silicon rubber or another elastic material, which can be bonded thereto, for example as a self adhesive layer. The flexible layers 38 are formed with the pattern for the ) channels 35 and the bellow sections 36. Accordingly, once the flexible layers 38 are bonded with their respective substrates 37, the channels 35 and the bellow sections 36 are formed by the gaps between the pattern and the substrate 37. In this way, a simple substrate can be used, which can 5 then have a complex arrangement of channels 35 and bellow sections fitted onto it. Indeed, multiple channels, and their bellow sections, can be formed on a single layer. Typically these multiple channels will be formed in parallel lines for use as a x- or y- axis in a grid-like matrix of a button array.

Once assembled, the layers are arranged on top of one another. A button member 31, preferably formed of a plastics material, can be aligned above the bellows. An actuation member 32, in the form of three plungers, is provided on the button member 31. The central plunger is configured to compress the bellow 36 on the upper layer, when the actuation member is in its lower position. The two peripheral plungers are configured to extend through apertures 39 provided in the upper layer to the lower layer, where they can compress the bellow 36 on the lower layer, when the actuation member is in its lower position.

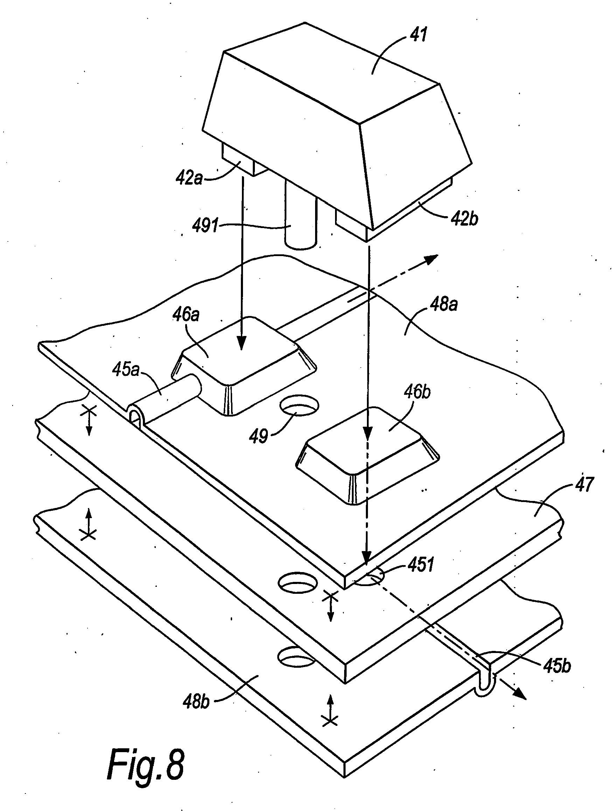

Figure 8 shows, in an expanded perspective view, an input button according to a fourth embodiment of the present invention, which can be used as part of a larger array of buttons. This embodiment is in many ways similar to the third embodiment described above with reference to Figure 7. In this case however, a single rigid substrate 47 is used; with an upper flexible layer 48a bonded to a top surface of the substrate 47, and a lower flexible layer 48b bonded to a bottom surface of the substrate 47.

The upper flexible layer 48a contains a channel 45a with associated bellow sections 46a which operate in the same way as discussed above. Also provided on the upper flexible layer 48a is a bellow section 46b which is associated with a channel 45b formed on the lower flexible layer 48b through aperture 451. A button member 41 is aligned with the layers, and hence the bellows 46a and 46b, by an alignment peg 491 which fits into apertures 49. Once aligned, the actuation member 42 has two protrusions which are positioned above the bellows, and the button being pressed causes them to move downwardly to compress the bellow sections.

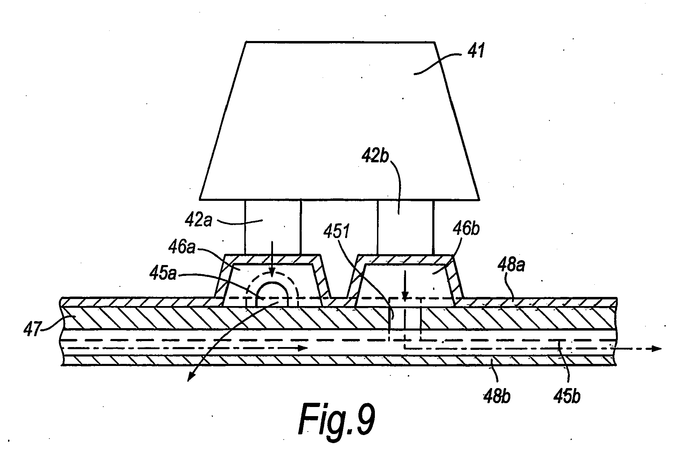

Figure 9 shows a simplified cross-sectional view of the fourth embodiment. When the button member is depressed, the protrusions of the actuation member move downwardly to compress bellow sections 46a and 46b simultaneously. In this way, fluid (e.g. air or a liquid) in the bellow section's cavity is forced outward. In the case of bellow section 4-6a, the fluid is forced along channel 45a formed on the upper flexible layer 48a. In the case of bellow section 46b, the fluid is forced down through aperture 451 in the substrate 47 and along channel 45b formed on the lower flexible layer 48b. Pressure sensors can then be provided at the distal ends of these channels for detecting the depression of the button member 41.

In the above embodiments it is preferable that the channels have internal bore sizes in the region of 1mm. If the bore sizes are too small, fluid flow is too restricted and the response speed is slower. If the bores are too large, the volume of fluid is increased and the strength of the signal is reduced. There are of course also a number of additional features which can be included in the above designs. For example, in embodiments which rely on increases in pressure, such as the second, third and fourth embodiments described above, a totally sealed system can cause false activation of the pressure sensors if, for example, direct sunlight heats up the fluid inside the channels. Accordingly, it is preferable that a small vent hole is provided in the channels which allows for slow changes in pressure to be equalised. The vent hole should be pin-hole size to avoid pressure being bled off too quickly from a key press.

The arrangement of the above described embodiments within the context of a larger array of buttons will now be described.

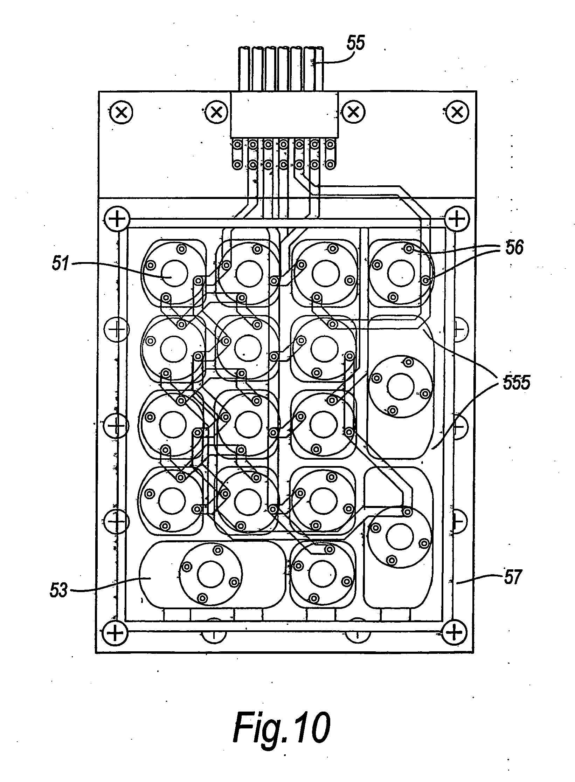

Figure 10 shows a fifth embodiment of the present invention where a plurality of buttons like those shown in Figures 1 to 3 are arranged within a specific array or grid. As shown, the example array of Figure 10 encompasses 17 buttons like those described above with reference to Figures 1 to 3 forming a pneumatic keypad, although clearly more, i.e. 110, would be provided for a conventional "QWERTY" keyboard. The pneumatic channels comprise seven main pneumatic channels 55 connected to a matrix of pneumatic paths 555. In this regard, the shutter 53 of each button is arranged to alter a flow the of media, in this case air, in the one or more pneumatic paths 555 relating to that button when the associated button is depressed, so that depression of each button will cause a unique signature in the main pneumatic channels 55.

The main pneumatic channels 55 are connected to remote, sensing apparatus and micro controller, which can convert and process the unique signature into an electronic signal for use in operating one or more functions of electronic device. In this embodiment, a pump is used to create a partial vacuum within the main pneumatic channels 55. Preferably, air flow restricting means are incorporated into the connections between the main pneumatic channels 55 and the pump. The airflow restricting means help prevent pressure increases in activated channels interfering with inactive channels. Conveniently, the main pneumatic channels 55 can be arranged to form essentially a single cable of multi-core tubing. In this way, the majority of the length of the main pneumatic channels 55 between the matrix and the pump appears as a single cable or tube, with each of the maim pneumatic channels 55 being a separate core within the multi-core tube.

Accordingly, the cabling or tubing is kept compact and tidy.

Each button has up to four apertures 56 associated with it which are connected to a unique combination of pneumatic paths 555 and hence main pneumatic channels 55. More or less apertures 56 can be used with different button configurations and/or different button members. When a button is pressed, a pressure increase in one or more of the pneumatic paths is simultaneously detected by the pressure sensors at the remote ends of the main pneumatic channels 55. The combination of the pneumatic paths 555, and hence the main pneumatic channels 55, in which a pressure increase is detected, is then used by the micro controller to identify which of the buttons has been pressed, and in response output the appropriate electrical signal to an electronic device.

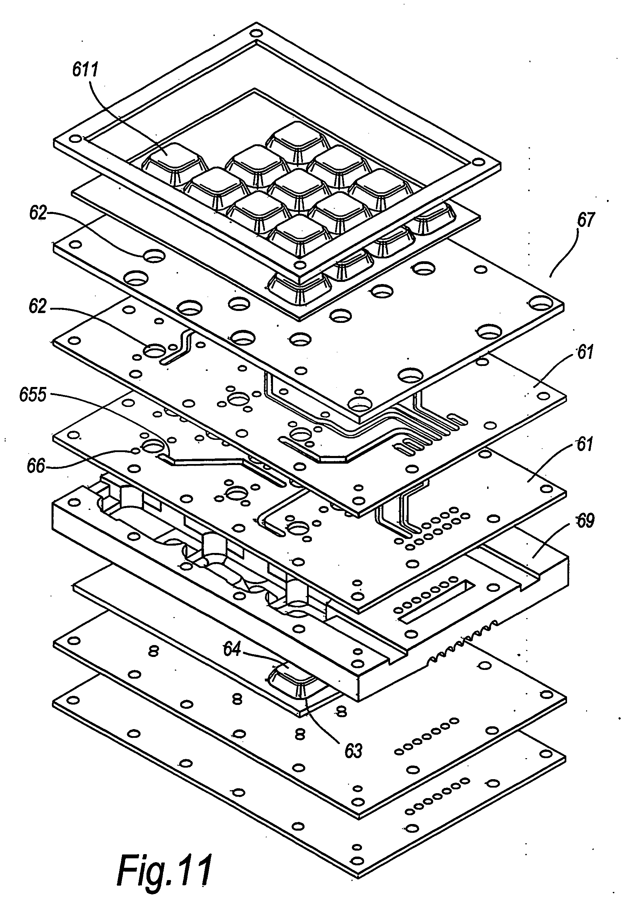

Figure 11 shows an exploded cross section view of apparatus of a sixth embodiment of the present invention having an array of buttons and a housing 67 similar to that described above with reference to Figure 10. The housing 57 is a composite of a number of laminate layers which are shown separated. During the manufacturing process these layers are sandwiched together. Two of the laminate layers are pneumatic layers 61, each of which having a number of button apertures 62. When the pneumatic layers 611 are combined together, corresponding butt-on apertures 62 from each pneumatic layer align with one another to form a hole through which the button member 611 can be fitted. As shown, the two pneumatic layers 61 have a configuration of pneumatic paths or path sections 655 travelling through them. When these pneumatic layers 61 are combined, a three dimensional network or matrix of pneumatic paths is formed.

Each of the buttons has up to four apertures 66 which open onto the underside of the bottom pneumatic layer. The apertures 66 project up from the under surface and connect into one or more of the pneumatic paths 655 in one or more of the layers 61. For example, an aperture may connect into a pneumatic path in the bottom layer or project up to connect to a pneumatic path in the top layer. The pneumatic layers' 61 three dimensional structure allows the pneumatic paths 655 to be isolated from one another to form a dense network of paths. A vestibular layer 69 is provided beneath the bottom pneumatic layer and forms a cavity into which the apertures 66 open to the outside atmosphere. In this embodiment, a key mat 63, having a number of shutters 64 formed thereon, is provided below the vestibular layer 69. When fitted togther, the shutters 64 fit inside the cavity formed by the vestibular layer 69 and align with the corresponding button apertures 62 in the pneumatic layers 61 above. In this way, when a button member 61 is fitted, it passes through the button apertures 62 and abuts at or adjacent one of the shutters 64.

In a normal un-pressed state, the shutters 64 sit in a upper rest position and seal the apertures 66. When a button member is operated by a user, the button member pushes one of the shutters 64 downwardly, opening the apertures 66 for that button to the cavity in the vestibular layer 69, thereby allowing atmospheric pressure to enter the pneumatic paths 655. As each button is connected to a unique combination of pneumatic paths 655, operation of a particular button therefore results in a unique signature created by paths 655 in the main pneumatic channels which service them. This allows the number of main pneumatic channels required to service the array of buttons to be reduced.

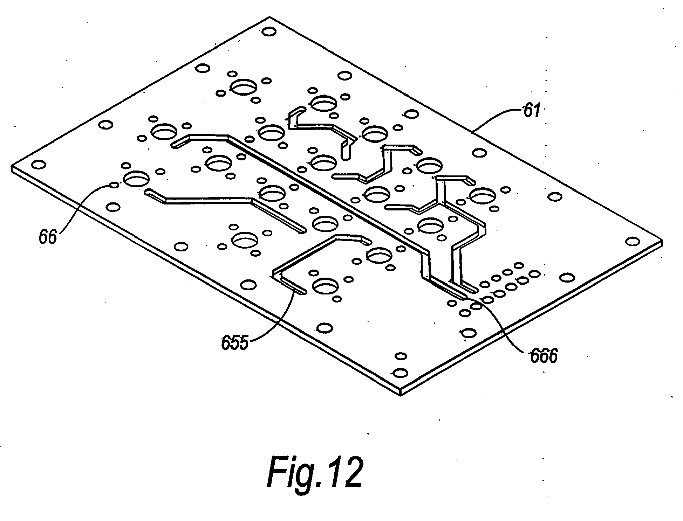

Figure 12 shows one of pneumatic layers 61 as described above in reference to figure 11. As shown, each button 611 has up to four apertures 66 associated with it. The pneumatic layer 61 also has a number of pneumatic paths 655 formed therein which are connected to one or more -of the apertures 66. Two of the pneumatic paths 655 are connected to two connection ports 666. The remaining pneumatic paths 655 are configured to connect to other pneumatic paths in adjacent pneumatic layers. Either directly or via adjacent pneumatic layers each of the pneumatic paths 655 is connected to at least one connection port 666 the connection ports connecting the matrix of pneumatic paths to the main pneumatic channels (not shown) servicing them. By forming the pneumatic matrix from a plurality of pneumatic layers, a complex three dimensional network or manifold can be formed using simplified manufacturing techniques. For example, each layer could be produced by mass manufacturing methods such as die casting or injection moulding, thereby allowing relatively cheap manufacture. Alternatively, a sheet material could be produced for each pneumatic layer and the paths and holes could machined or etched into them to form the pneumatic paths. Lamination of the pneumatic layers may be achieved, for example, by mechanical means, heating to cause bonding between layers, or by use of adhesives.

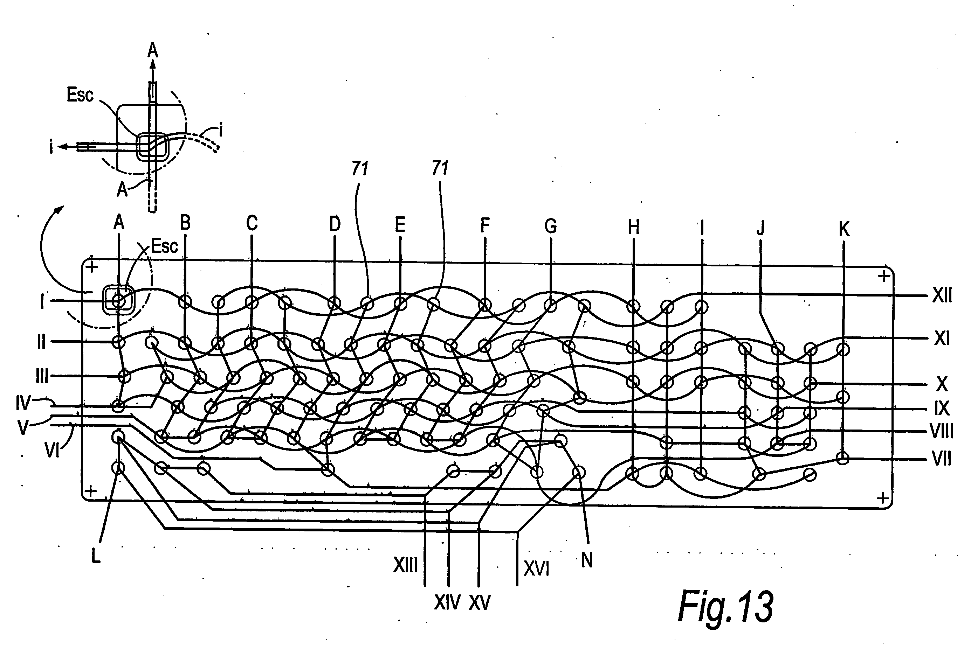

Figure 13 shows apparatus of a seventh embodiment of the present invention where an alternative array arrangement of buttons is used, in this case using buttons like those shown in any of figures 4 to 9. As shown, the array of buttons are arranged in a grid-like matrix which forms a keyboard arrangement.

Several channels, A-M, i-xvi, are arranged in a matrix so that each button member 71 is positioned above one or more, and typically two, channels. For clarity, each channel is depicted as a single line. In this respect, the actuating member 72 of each button member 71 is arranged to compress the one or more channels relating to that button member when the associated button member is depressed, so that depression of each button member will cause a unique signature of pressure change in the channels detected by pressure sensors connected to the end of each channel.

Accordingly, in the example shown in figure 13, if the button member labelled "Esc" is depressed, the pressure within the channels labelled "A" and "i" will increase causing, the sensors connected to these to generate an electrical signal. In this arrangement, only signals generated simultaneously by the sensors connected to channels "A" and "i" will be indicative of the button member labelled "Esc". This is more clearly shown in the enlarged portion of figure 13.

The configuration of the matrix, as shown above in reference to Figures 10 and 13 allows the button members to effectively share channels. For example, in the embodiment shown in figure 13, by using a matrix of channels, only 29 channels are required to service 105 separate buttons. By sharing channels in this way, and hence reducing the number of channels required, the size of the cabling, piping or tubing required for a keypad, for example, can be minimised so as to be suitable for a desktop keypad or keyboard. Moreover, by reducing the number of channels, the number of seals and connections that are required is reduced. There are also significant cost savings as less piping is used and a reduced number of pressure detectors is required.

In the above examples, the distal ends of the channels are connected, to remote sensing apparatus and micro controller, which can convert and process the unique signature into an electronic signal for use in operating one or more functions of an electronic device. Conveniently, the channels can be arranged to form essentially a single cable of multi-core tubing. In this way, the majority of the length of the main channels between the matrix and the sensors appears as a single cable or tube, with each of the channels, being a separate core within the multi-core tube. Accordingly, the cabling or tubing is kept compact and tidy.

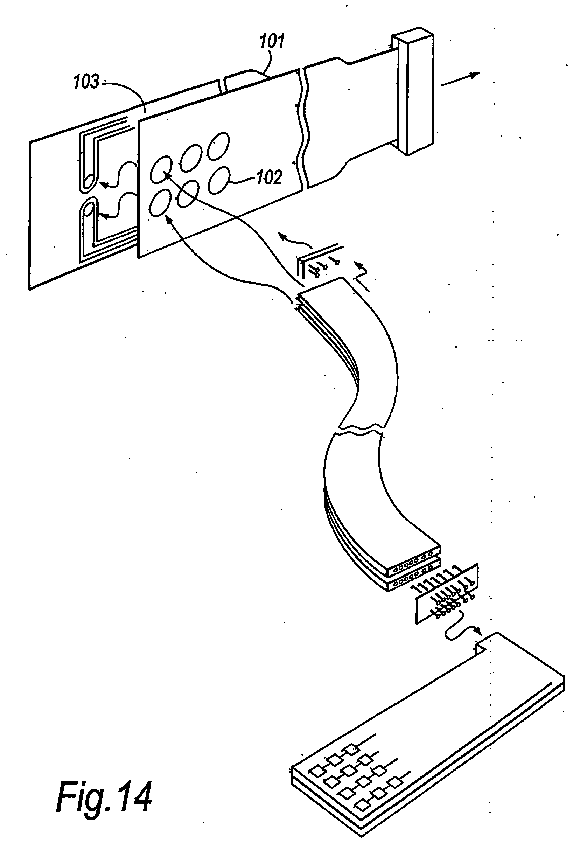

Figure 14 shows the keyboard arrangement shown in Figure 13 connecting to a remote sensing apparatus 101. In the embodiment shown in Figure 14, the sensing apparatus 101 comprises a flexible polyester sheet embossed with low pressure domes 102 which are printed with conductive inks.

When a button member is pressed, a pressure increase in one or more of the channels is transferred to the distal ends of the channels where it is applied to the conductive domes 102. This causes the -conductive domes to connect a circuit 103 on an underlying substrate. This connection indicates that there has been a pressure increase in that channel. The combination of the channels in which a pressure increase is detected is then used by the micro controller to identify which of the button members has been pressed, and in response output the appropriate electrical signal to an electronic device. As will be appreciated, a similar detector could be used to detect an increase in pressure in the case of the buttons shown in Figures 1 to 3. Other detectors could alternatively be used, provided they can detect a change in pressure in the channels, for example silicon pressure sensors, piezo-electric sensors, capacitive sensors, mechanical sensors could all be used.

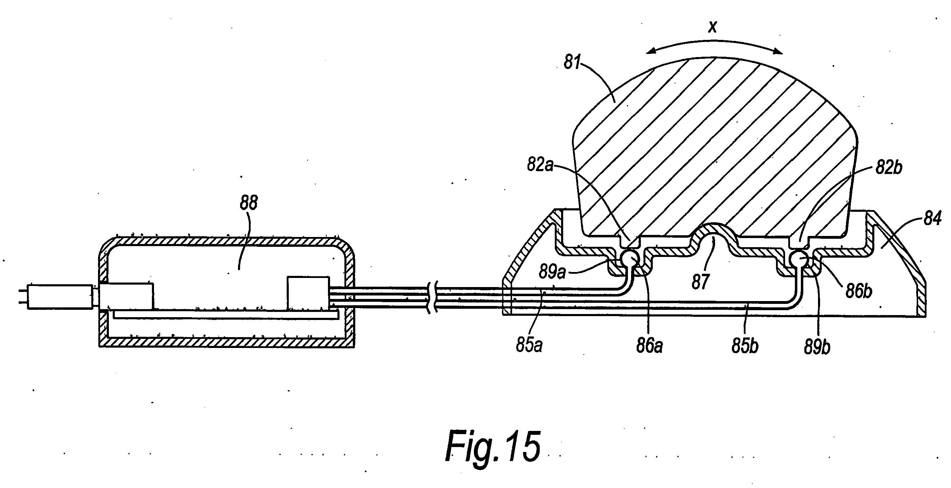

Figure 15 shows a cross sectional view of an eighth embodiment of the present invention, whereby the apparatus is adapted for use in a computer mouse. In this example, the button member 81 is in the form of a rocker body with two actuating members 82a, 82b positioned either side of a pivot means 87. The rocker body 81 is moveable within housing 84. Positioned below each actuating member 82a, 82b is a bulbous portion 86a, 86b of channels 85a, 85b with'the distal ends of the channels being connected to a pressure sensor 88. Each bulbous portion 86a, 8-6b is disposed within a respective recess 89a, 89b formed in the housing 84 below each actuating member 82a, 82b. The pivot means 87 allows the rocker body 81 to rock in the direction shown by the arrow x and so alternately causing the actuating members 82a, 82b to compress the bulbous portions 86a, 86b of the channels 85a, 85b. In the present example the pivot means is provided in the housing 84, however, it will be appreciated that the pivot means may also be provided on the underside of the mouse body 81.

As the bulbous portions 86a, 86b are alternatively compressed, the pressure inside the pneumatic channels 85a, 85b is likewise alternatively increased. The increase in pressure is detected by the pressure sensor 88 and then converted to an electrical signal for remote output to a computer (not shown). Each bulbous portion 86a, 86b, and hence each channel can be configured to produce an electrical output corresponding to a direction of movement. For example, in the embodiment shown in figure 15, compression of bulbous portion 86a may produce an electrical signal to effect a first direction of movement of a cursor on a computer screen, whilst compression of bulbous.portion 86b may produce an electrical signal to effect a second direction of movement of a curser on a computer screen. Whilst only two bulbous portions are shown in the embodiment of figure 15, further bulbous portions may be provided in order to effect movement of a cursor in a range of directions. "For example, with four bulbous portions, four directions of movement can be imparted. Furthermore, for each bulbous portion there may exist a corresponding actuating member positioned above said bulbous portion. Alternatively, a range of bulbous portions may be provided in a ring configuration under a pivotable ring shaped actuating member.

Further button members may be provided within the mouse for effecting selection of icons highlighted by a cursor on a computer screen. These further button members may be provided in accordance with one of the second to fourth embodiments of the present invention, i.e. with an actuating member for compressing a channel when urged into a lower position, or for compressing a bulbous portion of a channel.

In the embodiment described with reference to figure 15 above, it will be appreciated that the bulbous portions are a preferred feature, with the possibility that the actuating members 82 may simply act upon the channels 85a, 85b directly.

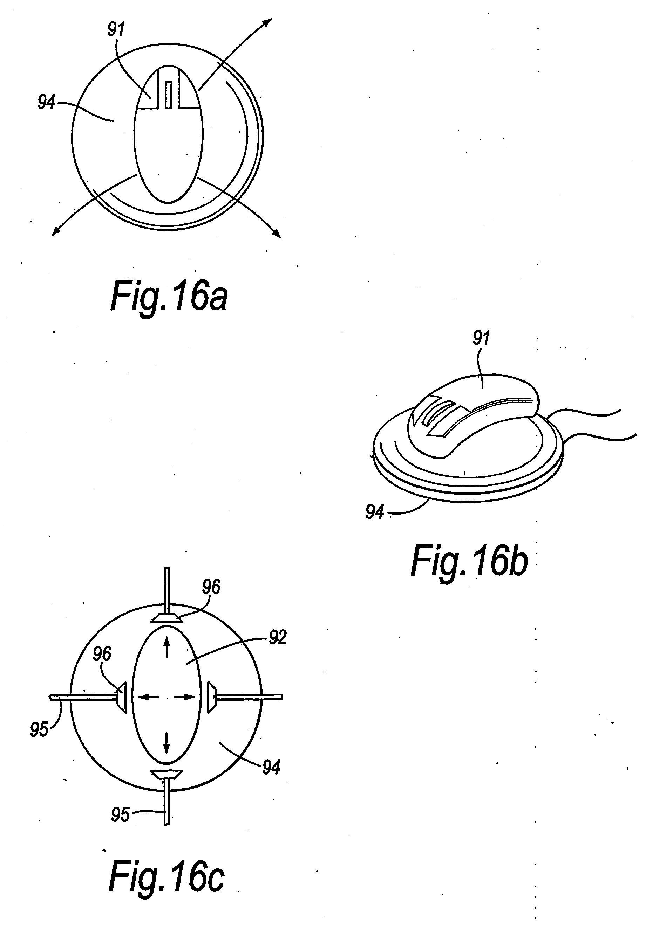

Figures 16a to 16c show apparatus of a ninth embodiment of the present invention, similar to that shown in figure 15, whereby the apparatus is adapted for use in a computer mouse.

Figures 16a and 16b respectively show a plan view and a perspective view of the mouse. In this example, the button member is in the form of a mouse shaped slider 91 which sits on housing 94. The mouse shaped slider 91 is moveable relative to the housing 94 for effecting the various directional movements of the mouse.

Figure, 16c shows a cross-sectional plan view of the mouse. As shown, in this example, four bellows 96 are provided inside the housing 94. An actuation member 92 is provided on the underside of the mouse shaped slider 91 so that when the mouse shaped slider 91 is moved in a particular direction, one or more of the bellows 96 is compressed by the actuation member 92, resulting in an increase in pressure in the associated channels 95. As with previous embodiments, this increase in pressure can then be used, via pressure sensor and microprocessor to effect movement of a cursor in a range of directions.

As shown, the mouse also includes a number of buttons on the mouse shaped slider 91 allowing for the selection of icons highlighted by a cursor on a computer screen. These further buttons involve an actuating member for compressing a channel when urged into a lower position.

It will be appreciated that a number of variations can be made to the apparatus. For example, whilst, the above description relates primarily to buttons for keyboard like structures, the invention encompasses other forms of input devices, such as a computer mouse. Furthermore, the fluid used in the channels may be any suitable liquid, such as water or an oil. Alternatively it may be a gas such as air. A reservoir may be provided for topping up the channels, preferably with a non-return valve.

## Claims

1. Apparatus for actuating one or more functions on a remote electronic device; the apparatus comprising:-
a housing (7) having no electronic components and comprising at least one substantially rigid substrate layer (37);
one or more fluid path layers (35) coupled to the or .each substantially rigid substrate layer, said one or more fluid path layers having a pattern for a matrix of fluid paths formed therein such that said matrix is formed between said substantially rigid substrate layer and the one or more fluid path layers;
a plurality of fluid channels for conveying fluid media between the matrix and a remote conversion means;
a plurality of button members (31), each button member being associated with at least one fluid path to have a unique address within the matrix of fluid paths, and each button member being movable relative to its respective at least one fluid path to cause an internal pressure change therein, said internal pressure change being detectable in the plurality of fluid channels as a unique signature for that button member;
whereby said remote conversion means can detect said unique signature on operation of each button member and produce an electrical signal for actuating an appropriate function on a remote electronic device.

2. Apparatus according to claim 1, wherein movement of the or each button member causes compression of the fluid path layer at the at least one fluid path to thereby increase the internal pressure therein.

3. Apparatus according to claim 1 or 2, wherein the at least one fluid path is provided with one or more bulbous sections associated with each button member, wherein movement of said button member causes -compression of the associated bulbous section.

4. Apparatus according to claim 3, wherein each bulbous section is in the form of a bellow.

5. Apparatus according to any preceding claim, wherein said remote conversion means comprises sensor means for detecting a pressure change.

6. Apparatus according to claim 5, wherein the conversion means further comprises sensor adjustment means for adjusting the sensitivity of the sensor.

7. Apparatus according to any preceding claim, wherein the conversion means is responsive to different pressure changes such that the greater the internal pressure change in said plurality of fluid paths and fluid -channels, the greater the electrical signal produced by the conversion means.

8. An apparatus according to any preceding claim wherein the fluid paths and fluid channels are pneumatic channels.

9. An apparatus according to any one of claims 1 to 7, wherein the fluid paths and fluid channels are hydraulic channels.

10. Apparatus according to any preceding claim, wherein each button member comprises one or more actuating members for acting on the associated at least one fluid path to cause an internal pressure change therein.

11. Apparatus according to any preceding claim, wherein the resting internal pressure of said matrix of fluid paths is provided at atmospheric pressure or at greater than atmospheric pressure.

12. Apparatus according to any preceding claim, wherein said fluid paths are resiliently deformable.

13. Apparatus according to any preceding claim, wherein the at least one fluid path layers forming said fluid paths are formed of flexible material.

14. Apparatus according to any preceding claim, wherein the one or more fluid path layers is bonded to the or each substantially rigid substrate layer.

15. A computer mouse comprising apparatus according to any preceding claim.

16. A keyboard or keypad comprising apparatus according to any preceding claim.

17. A method of manufacturing apparatus for actuating one or more functions on a remote electronic device; the method comprising the steps of:-
forming one or more fluid path layers having a pattern for a matrix of fluid paths formed therein;
coupling said one or more fluid path layers to at least one substantially rigid substrate to form said matrix there between, said at least one rigid substrate provided in a housing having no electronic components;
associating a plurality of button members with said matrix of fluid paths, each button member being associated with at least one fluid path to have a unique address within the matrix, and each button member being movable relative to its respective at least one fluid path to cause an internal pressure change therein;
providing a plurality of fluid channels for conveying fluid media between the matrix and a remote conversion means,
wherein an internal pressure change in the fluid paths is detectable in the plurality of fluid channels as a unique signature for each button member and is detectable by said remote conversion for actuating an appropriate function on a remote electronic device.

## Patentansprüche

1. Vorrichtung zum Betätigen einer oder mehrerer Funktionen in einem entfernten elektronischen Gerät; wobei die Vorrichtung Folgendes umfasst: -
ein Gehäuse (7), das keine elektronischen Komponenten aufweist und mindestens eine im Wesentlichen starre Substratschicht (37) umfasst;
eine oder mehrere Fluidbahnschichten (35), die mit der oder jeder im Wesentlichen starren Substratschicht verbunden sind, wobei die eine oder mehrere Fluidbahnschichten ein Muster für eine Matrix von Fluidbahnen aufweisen, die so darin ausgebildet sind, dass die Matrix zwischen der im Wesentlichen starren Substratschicht und der einen oder mehreren Fluidbahnschichten ausgebildet ist;
eine Vielheit von Fluidkanälen zum. Befördern von Fluidmedien zwischen der Matrix und einem entfernten Umwandlungsmittel;
eine Vielheit von Tastenbauelementen (31), wobei jedes Tastenbauelement an mindestens eine Fluidbahn angeschlossen ist, um eine eindeutige Adresse in der Matrix von Fluidbahnen zu haben, und jedes Tastenbauelement im Verhältnis zu mindestens jeweils dessen einer Fluidbahn beweglich ist, um eine Innendruckänderung darin zu erzeugen, wobei die Innendruckänderung in der Vielheit von Fluidkanälen als eindeutige Signatur für dieses Tastenbauelement erkennbar ist;
wobei das entfernte Umwandlungsmittel die eindeutige Signatur beim Bedienen jedes Tastenbauelements erkennen und ein elektrisches Signal zum Betätigen einer entsprechenden Funktion in einem entfernten elektronischen Gerät erzeugen kann.

2. Vorrichtung nach Anspruch 1, wobei die Bewegung des oder jedes Tastenbauelements die Zusammendrückung der Fluidbahnschicht mindestens an der einen Fluidbahn verursacht, um **dadurch** den Innendruck darin zu erhöhen.

3. Vorrichtung nach Anspruch 1 oder 2, wobei mindestens die eine Fluidbahn mit einem oder mehreren knollenförmigen Teilbereichen vorgesehen ist, die an jedes Tastenbauelement angeschlossen sind, wobei die Bewegung des Tastenbauelements die Zusammendrückung des angeschlossenen knollenförmigen Teilbereichs verursacht.

4. Vorrichtung nach Anspruch 3, wobei jeder knollenförmige Teilbereich balgenförmig ist.

5. Vorrichtung nach einem vorangehenden Anspruch, wobei das entfernte Umwandlungsmittel ein Sensormittel zum Erkennen einer Druckänderung umfasst.

6. Vorrichtung nach Anspruch 5, wobei, das Umwandlungsmittel des Weiteren ein Sensoranpassungsmittel zum Anpassen der Empfindlichkeit des Sensors umfasst.

7. Vorrichtung nach einem vorangehenden Anspruch, wobei das Umwandlungsmittel auf verschiedene Druckänderungen so reagiert, dass je größer die Innendruckänderung in der Vielheit von Fluidbahnen und Fluidkanälen, desto größer das vom Umwandlungsmittel erzeugte elektrische Signal.

8. Vorrichtung nach einem vorangehenden Anspruch, wobei die Fluidbahnen und Fluidkanäle pneumatische Kanäle sind.

9. Vorrichtung nach einem der Ansprüche 1 bis 7, wobei die Fluidbahnen und Fluidkanäle hydraulische Kanäle sind.

10. Vorrichtung nach einem vorangehenden Anspruch, wobei jedes Tastenbauelement ein oder mehrere betätigende Bauelemente zum Wirken auf mindestens die eine angeschlossene Fluidbahn umfasst, um eine Innendruckänderung darin zu verursachen.

11. Vorrichtung nach einem vorangehenden Anspruch, wobei der Ruheinnendruck der Matrix von Fluidbahnen bei atmosphärischem Druck oder einem größeren als atmosphärischen Druck vorgesehen ist.

12. Vorrichtung nach einem vorangehenden Anspruch, wobei die Fluidbahnen federnd verformbar sind.

13. Vorrichtung nach einem vorangehenden Anspruch, wobei mindestens die eine der Fluidbahnschichten, die die Fluidbahnen bilden, aus einem biegsamen Werkstoff gebildet werden.

14. Vorrichtung nach einem vorangehenden Anspruch, wobei die eine oder mehrere Fluidbahnschichten an die oder jede im Wesentlichen starre Substratschicht geklebt ist.

15. Computermaus, die eine Vorrichtung gemäß einem vorangehenden Anspruch umfasst.

16. Tastatur oder Kleintastatur, die eine Vorrichtung gemäß einem vorangehenden Anspruch umfasst.

17. Verfahren des Herstellens einer Vorrichtung zum Betätigen einer oder mehrerer Funktionen in einem entfernten elektronischen Gerät; wobei das Verfahren folgende Schritte umfasst: -
Bilden einer oder mehrerer Fluidbahnschichten, die ein Muster für eine Matrix von darin gebildeten Fluidbahnen aufweisen;
Verbinden der einen oder mehrerer Fluidbahnschichten mit mindestens einem im Wesentlichen starren Substrat, um die Matrix dazwischen zu bilden, wobei mindestens das eine starre Substrat in einem Gehäuse vorgesehen ist, das keine elektronischen Komponenten aufweist;
Anschließen einer Vielheit von Tastenbauelementen an die Matrix von Fluidbahnen, wobei jedes Tastenbauelement an mindestens eine Fluidbahn angeschlossen ist, um eine eindeutige Adresse in der Matrix zu haben, und jedes Tastenbauelement im Verhältnis zu mindestens jeweils dessen einer Fluidbahn beweglich ist, um eine Innendruckänderung darin zu verursachen;
Vorsehen einer Vielheit von Fluidkanälen zum Befördern von Fluidmedien zwischen der Matrix und einem entfernten Umwandlungsmittel;
wobei eine Innendruckänderung in den Fluidbahnen in der Vielheit von Fluidkanälen als eindeutige Signatur für jedes Tastenbauelement erkennbar ist und über das entfernte Umwandlungsmittel zum Betätigen einer entsprechenden Funktion in einem entfernten elektronischen Gerät erkennbar ist.

## Revendications

1. Appareil permettant d'activer une ou plusieurs fonctions sur un dispositif électronique distant, l'appareil comprenant :
un boîtier (7) ne présentant aucun composant électronique et comprenant au moins une couche de substrat essentiellement rigide (37) ;
une ou plusieurs couches de circuit d'écoulement (35) couplées à la ou à chaque couche de substrat essentiellement rigide, un motif de matrice de circuits d'écoulement étant formé sur ladite ou lesdites couches de circuit d'écoulement de telle sorte que ladite matrice est formée entre ladite couche de substrat essentiellement rigide et la ou plusieurs couches de circuit d'écoulement ;
une pluralité de canaux d'écoulement permettant d'acheminer des milieux fluides entre la matrice et un moyen de conversion distant ;
une pluralité d'éléments de bouton (31), chaque élément de bouton étant associé à au moins un circuit d'écoulement afin de disposer d'une adresse unique au sein de la matrice de circuits d'écoulement, et chaque élément de bouton étant mobile par rapport à son au moins un circuit d'écoulement respectif afin de causer un changement de pression interne à l'intérieur de celui-ci, ledit changement de pression interne pouvant être détecté dans la pluralité de canaux d'écoulement comme une signature unique de cet élément de bouton;
dans lequel ledit moyen de conversion distant peut détecter ladite signature unique de chaque élément de bouton en application et produire un signal électrique permettant d'activer une fonction appropriée sur un dispositif électronique distant.

2. Appareil selon la revendication 1, dans lequel le mouvement du ou de chaque élément de bouton cause la compression de la couche de circuit d'écoulement au niveau de l'au moins un circuit d'écoulement afin d'augmenter la pression interne à l'intérieur de celui-ci.

3. Appareil selon la revendication 1 ou 2, dans lequel l'au moins un circuit d'écoulement est doté d'une ou plusieurs sections bulbeuses associées à chaque élément de bouton, dans lequel le mouvement dudit élément de bouton cause la compression de la section bulbeuse associée.

4. Appareil selon la revendication 3, dans lequel chaque section bulbeuse prend la forme d'un soufflet.

5. Appareil selon l'une quelconque des revendications précédentes, dans lequel ledit moyen de conversion distant comprend des moyens de capteur permettant de détecter un changement de pression.

6. Appareil selon la revendication 5, dans lequel le moyen de conversion comprend en outre un moyen de réglage de capteur permettant de régler la sensibilité du capteur.

7. Appareil selon l'une quelconque des revendications précédentes, dans lequel le moyen de conversion réagit en fonction de différents changements de pression de telle sorte que, plus le changement de pression interne dans ladite pluralité de circuits d'écoulement et de canaux d'écoulement est important, plus le signal électrique produit par le moyen de conversion est important.

8. Appareil selon l'une quelconque des revendications précédentes, dans lequel les circuits d'écoulement et canaux d'écoulement sont des canaux pneumatiques.

9. Appareil selon l'une quelconque des revendications 1 à 7, dans lequel les circuits d'écoulement et canaux d'écoulement sont des canaux hydrauliques.

10. Appareil selon l'une quelconque des revendications précédentes, dans lequel chaque élément de bouton comprend un ou plusieurs organes de commande permettant d'agir sur l'au moins un circuit d'écoulement afin de causer un changement de pression interne à l'intérieur de celui-ci.

11. Appareil selon l'une quelconque des revendications précédentes, dans lequel la pression interne au repos de ladite matrice de circuits d'écoulement est supérieure ou égale à la pression atmosphérique.

12. Appareil selon l'une quelconque des revendications précédentes, dans lequel lesdits circuits d'écoulement sont élastiquement déformables.

13. Appareil selon l'une quelconque des revendications précédentes, dans lequel l'au moins une couche de circuit d'écoulement formant lesdits circuits d'écoulement est fabriquée en matière flexible.

14. Appareil selon l'une quelconque des revendications précédentes, dans lequel la ou plusieurs couches de circuit d'écoulement sont liées à la ou chaque, couche de substrat essentiellement rigide.

15. Souris d'ordinateur comprenant l'appareil selon l'une quelconque des revendications précédentes.

16. Clavier ou pavé numérique comprenant l'appareil selon l'une quelconque des revendications précédentes.

17. Procédé de fabrication de l'appareil permettant d'activer une ou plusieurs fonctions sur un dispositif électronique distant, le procédé comprenant les étapes suivantes :
formation d'une ou plusieurs couches de circuit d'écoulement sur laquelle ou lesquelles un motif de matrice de circuits d'écoulement est formé ;
couplage de ladite ou desdites couches de circuits d'écoulement à au moins un substrat essentiellement rigide afin de former ladite matrice entre ceux-ci, ledit au moins un substrat rigide étant disposé dans un boîtier ne présentant aucun composant électronique ;
association d'une pluralité d'éléments de bouton à ladite matrice de circuits d'écoulement, chaque élément de bouton étant associé à au moins un circuit d'écoulement afin de disposer d'une adresse unique au sein de la matrice, et chaque élément de bouton étant mobile par rapport à son au moins un circuit d'écoulement respectif afin de causer un changement de pression interne à l'intérieur de celui-ci ;
fourniture d'une pluralité de canaux d'écoulement permettant d'acheminer des milieux fluides entre la matrice et un moyen de conversion distant,
dans lequel un changement de pression interne dans les circuits d'écoulement peut être détecté dans la pluralité de canaux d'écoulement comme une signature unique de ce bouton et détecté par ledit moyen de conversion distant permettant d'activer une fonction appropriée sur un dispositif électronique
